# EUROPÄISCHE PATENTSCHRIFT

(11) **EP 2 829 358 B1**
(45) Veröffentlichungstag und Bekanntmachung des Hinweises auf die Patenterteilung: **21.09.2016**
(21) Anmeldenummer: 13003718.7
(22) Anmeldetag: 24.07.2013
(51) Int. Cl.: B23Q 7/10, B23Q 7/14, B65G 1/04, B65G 1/133

(54) **Werkstückwechsler für den automatischen Werkstück-oder Palettenwechsel bei einem Bearbeitungszentrum**
Workpiece changing device for automatic work piece or pallet changing in a processing centre
Changeur de pièce pour le changement automatique de pièces ou de palettes dans un centre d'usinage

(43) Veröffentlichungstag der Anmeldung: 28.01.2015
(73) Patentinhaber: Maschinenfabrik Berthold Hermle AG, 78559 Gosheim (DE)
(72) Erfinder: Bernhard, Franz-Xaver, 78549 Spaichingen (DE); Schwörer, Tobias, 78598 Königsheim (DE); Dietmann, Michael, 72379 Hechingen (DE)
(74) Vertreter: Hoefer & Partner Patentanwälte mbB

(56) Entgegenhaltungen:
- EP-A2- 0 462 533
- EP-A2- 2 511 044
- US-A- 4 986 715
- US-A1- 2004 245 278

## Beschreibung

Die Erfindung betrifft einen Werkstückwechsler für den automatischen Werkstück- oder Palettenwechsel, wobei der Werkstückwechsler vorzugsweise in Portalbauweise aufgebaut und insbesondere zur seitlichen Be- und Entladung eines Bearbeitungszentrums in Gantry- oder Fahrständerbauweise geeignet ist, umfassend eine Speicheranordnung für Werkstücke oder Werkstückpaletten mit einer Vielzahl von Ablageplätzen, die auf mehreren vertikal übereinander angeordneten Ablageebenen die Form eines Kreisrings bilden und die auf allen Ablageebenen gemeinsam kraftbetrieben um eine vertikale Achse drehbar sind und eine seitlich neben der Speicheranordnung befindliche Handhabungseinrichtung für die Werkstücke oder die Werkstückpaletten, die linear entlang einer horizontalen Achse und linear entlang einer vertikalen Achse verfahrbar und um diese vertikale Achse drehbar ist.

Derartige Werkstückwechsler sind aus der DE 10 2011 016 713 A1 oder der EP 0 462 533 A2 bekannt.

Unter dem Begriff - Portalbauweise - wird im Sinne der vorliegenden Erfindung ein Werkstückwechsler verstanden, der in seiner Ausgestaltung nach dem im Maschinenbau bekannten Portalsystem errichtet ist und beispielsweise einem Portalkran ähnelt, indem eine horizontale Brücke auf vertikalen Stützen angeordnet ist und daran eine hängende, in mehreren Raumrichtungen verfahrbare Handhabungseinrichtung angebracht ist.

Zur Automatisierung von Bearbeitungszentren sind zahlreiche Lösungen in Form von Werkstückwechslern, Palettenwechslern oder komplexen Robotersystemen bekannt. Allen gemeinsam ist das Ziel, einen möglichst mannarmen Betrieb eines solchen Bearbeitungszentrums zu ermöglichen, indem eine Vielzahl von unbearbeiteten Rohteilen oder bearbeiteten Fertigteilen in einer Speicheranordnung zwischengelagert und bei Bedarf dem Bearbeitungszentrum automatisch zu- und abgeführt werden. Neben der Bearbeitungsdauer eines Werkstückes bestimmt die Anzahl der Ablageplätze daher maßgeblich die Dauer einer mannlosen Periode und folglich die in einem Betrieb mit mehreren solcher automatisierter Bearbeitungszentren benötigte Anzahl an Bedienern. Dementsprechend ist eine hohe Anzahl von Ablageplätzen in den meisten Fällen von großem Vorteil. Um auf kleiner Aufstellfläche eine hohe Speicherkapazität zu erreichen, eignen sich Speichereinheiten mit mehreren Ablageebenen besonders gut. Jedoch bestehen auch in der Höhe gewisse Platzbeschränkungen, so dass es nutzbringend ist, die einzelnen Ablageebenen unter Berücksichtigung der maximalen Werkstückhöhe möglichst dicht übereinander anzuordnen. Dabei muss allerdings berücksichtigt werden, dass die Werkstücke inklusive der eventuell vorhandenen Werkstückpaletten trotz der dichten Anordnung noch möglichst einfach aus den Ablageplätzen entnommen werden können, ohne hierfür eine zusätzliche Fahrachse oder gar eine zusätzliche Wechseleinrichtung vorsehen zu müssen. Weiterhin gilt es für einen Werkstückwechsler der eingangs genannten Art zu berücksichtigen, dass der Arbeitsraum des Bearbeitungszentrums für eventuelle manuelle Eingriffe eine gute Zugänglichkeit aufweisen sollte.

Aus der DE 10 2011 016 713 A1 ist ein Werkstückwechsler mit einem drehbaren Turmspeicher bekannt, der seitlich neben einer Handhabungseinrichtung angebracht ist. Der Turmspeicher besteht aus einer Drehscheibe, auf der mehrere gleichartige Regalmodule in Trägerkonstruktion angeordnet sind, und ist Bestandteil eines kreisringförmig angeordneten Regalspeichers. Die drehbare Handhabungseinrichtung ist für eine Frontbeladung des abgebildeten Bearbeitungszentrums ausgebildet, was sich für einige Anwendungen aufgrund der beschränkten Zugänglichkeit zum Bearbeitungszentrum als nachteilig auswirkt. Einen wesentlichen Nachteil des drehbaren Turmspeichers bilden die Träger der einzelnen Regalmodule, die eine Entnahme und Ablage der Werkstückpaletten einzig durch eine Linearbewegung zulassen. Dies hat bei Werkstückwechslern, bei denen die Horizontalbewegungen nicht auf einer drehbaren Vorrichtung angebracht sind, wie zum Beispiel bei Portalsystemen, den großen Nachteil, dass eine zusätzliche horizontale Achsbewegung geschaffen werden muss. Des Weiteren ist nachteilig, dass die Handhabungseinrichtung eine relativ große Aufstellfläche beansprucht und somit die platzbedingten Vorteile der relativ kleinen Aufstellfläche des mehrstöckigen Turmspeichers teilweise wieder aufgehoben werden.

Aus der EP 0 462 533 A2 ist ebenfalls ein Werkstückwechsler bekannt, der eine oder mehrere drehbare mehrstöckige Speicheranordnungen und eine seitlich neben den Speicheranordnungen befindliche Handhabungseinrichtung aufweist. Diese Handhabungseinrichtung ist auf einem drehbaren Sockel gelagert, wodurch sich die translatorischen Raumachsen bei einer Rotationsbewegung mitdrehen. Durch eine kompakte Bauform kann die Handhabungseinrichtung sehr nahe neben der Speicheranordnung positioniert werden. Aufgrund dessen ist allerdings auch eine zweite Handhabungseinrichtung für den Werkstückwechsel mit dem Bearbeitungszentrum erforderlich. Außerdem ist auch dieser Werkstückwechsler für eine Beladung auf der Vorderseite des Bearbeitungszentrums vorgesehen und beschränkt daher die Zugänglichkeit für das Bedienpersonal. Für die Entnahme der Werkstücke aus der Speicheranordnung ist ebenfalls eine Linearbewegung des Greifers erforderlich.

Ausgehend vom Stand der Technik liegt der vorliegenden Erfindung die Aufgabe zugrunde, einen Werkstückwechsler mit einer mehrstöckigen Speicheranordnung zu schaffen, die es insbesondere für ein Portalsystem ermöglicht, mit einer Handhabungseinrichtung, die nur zwei translatorische und eine rotatorische Bewegungsrichtung ausführen kann, sowohl die Werkstücke bzw. die Werkstückpaletten aus der Speicheranordnung zu entnehmen und abzulegen, als auch den Werkstückwechsel mit dem Bearbeitungszentrum, vorzugsweise von der Seite, durchzuführen. Außerdem soll der Werkstückwechsler möglichst platzsparend aufgebaut sein und gegenüber einem Werkstückwechsler mit einer gleichartig aufgebauten einstöckigen Speicheranordnung keine maßgebliche Vergrößerung der Aufstellfläche verursachen.

Diese Aufgabe wird bei einem Werkstückwechsler für den automatischen Werkstück- oder Palettenwechsel, wobei der Werkstückwechsler vorzugsweise in Portalbauweise aufgebaut und insbesondere zur seitlichen Be- und Entladung eines Bearbeitungszentrums in Gantry- oder Fahrständerbauweise geeignet ist, umfassend eine Speicheranordnung für Werkstücke oder Werkstückpaletten mit einer Vielzahl von Ablageplätzen, die auf mehreren vertikal übereinander angeordneten Ablageebenen die Form eines Kreisrings bilden und die auf allen Ablageebenen gemeinsam kraftbetrieben um eine vertikale Achse drehbar sind und eine seitlich neben der Speicheranordnung befindliche Handhabungseinrichtung für die Werkstücke oder die Werkstückpaletten, die linear entlang einer horizontalen Achse und linear entlang einer vertikalen Achse verfahrbar und um diese vertikale Achse drehbar ist, erfindungsgemäß dadurch gelöst, dass die Ablageplätze auf einer Ablageebene winkelversetzt zu den Ablageplätzen auf der darüber- und/oder darunterliegenden Ablageebene angeordnet sind, so dass über und/oder unter jedem Werkstück bzw. jeder Werkstückpalette ein freier Zwischenraum entsteht, in den die Störkonturen der Handhabungseinrichtung bei einem Wechselvorgang eintauchen können, und dass der freie Zwischenraum neben jedem Ablageplatz groß genug ist, um die Werkstücke oder die Werkstückpaletten mit der Handhabungseinrichtung in der jeweiligen Ablageetage in horizontaler Richtung nur durch eine kreis- oder ellipsenförmige Bewegung der jeweiligen Übergabeposition zuzuführen oder von dieser zu entfernen.

Die Erfindung verbessert den bekannten Stand der Technik dahingehend, dass es erstmalig möglich ist, eine Handhabungseinrichtung so nahe neben einer mehrstöckigen kreisringförmigen Speicheranordnung anzuordnen, dass sich der Störkreis der Speicheranordnung mit Störkonturen der Handhabungseinrichtung in gewissen Ebenen überschneidet. Mehrstöckige Speicheranordnungen, bei denen die Handhabungseinrichtung aus Platzgründen derart nahe neben der Speicheranordnung angebracht ist, mussten bisher mit großem vertikalem Abstand zwischen den Ablageebenen ausgeführt werden, damit die Störkonturen nicht kollidieren und ein Wechselvorgang durch eine Drehbewegung im vertikalen Zwischenraum erfolgen konnte. Nach dem neuen erfindungsgemäßen Aufbau kann der vertikale Abstand zwischen der Werkstückoberkante und der darüber liegenden Ablageebene sehr klein gehalten werden, so dass der vertikale Abstand zwischen zwei Ablageebenen gegenüber dem bekannten Stand der Technik nahezu halbiert wird.

Die Speicherkapazität des Werkstückwechslers wird durch den Aufbau mit mehreren Ablageebenen gegenüber einem Werkstückwechsler mit einer gleichartig aufgebauten einstöckigen Speicheranordnung um ein Vielfaches erhöht, ohne die Aufstellfläche maßgeblich zu vergrößern. Für die Ausführung mit nur zwei Ablageebenen wird die Speicherkapazität verdoppelt, obwohl die Gesamthöhe des Werkstückwechslers gegenüber einer einstöckigen Variante nicht erhöht werden muss. Nach dem bisherigen Stand der Technik musste der Wechselvorgang nämlich über der jeweiligen Ablageetage erfolgen, wenn die Handhabungseinrichtung derart nahe neben der Speicheranordnung angebracht war. Ein Werkstückwechsler mit einstöckiger Speicheranordnung musste daher bereits gleich hoch ausgeführt sein, wie es bei einer zweistöckigen Ausführung nach dem neuen erfindungsgemäßen Aufbau, der einen Wechselvorgang innerhalb der gleichen Ablageetage zulässt, der Fall ist.

Die Unteransprüche haben vorteilhafte Weiterbildungen der Erfindung zum Inhalt.

Gemäß einer bevorzugten Weiterbildung ist der freie Zwischenraum neben jedem Ablageplatz groß genug, um die Werkstücke oder die Werkstückpaletten innerhalb der jeweiligen Ablageetage in horizontaler Richtung nur durch die reine kreisförmige Drehbewegung der Handhabungseinrichtung der jeweiligen Übergabeposition zuzuführen oder von dieser zu entfernen.

Gemäß einer bevorzugten Weiterbildung dient ein Ablageplatz als Leerplatz und wird nicht mit Werkstücken bzw. Werkstückpaletten belegt, um den Transport eines Werkstücks bzw. einer Werkstückpalette in linearer Horizontalrichtung innerhalb der jeweiligen Ablageetage zu ermöglichen.

Gemäß einer bevorzugten Weiterbildung befindet sich der Leerplatz auf der obersten oder der untersten Ablageebene.

Gemäß einer bevorzugten Weiterbildung sind pro Ablageebene jeweils 8 Ablageplätze mit einer gleichmäßigen Kreisteilung von 45° angeordnet.

Gemäß einer bevorzugten Weiterbildung beträgt der Versatz zwischen den Ablageplätzen auf den vertikal benachbarten Ablageebenen jeweils 22,5°.

Der Erfindung liegt ferner die Aufgabe zugrunde, ein Verfahren für den automatischen Wechselvorgang bereitzustellen, durch das die vorgegebenen Platzverhältnisse optimal genutzt werden können und eine kompaktere Bauweise ermöglicht werden kann.

Diese Aufgabe wird gelöst durch ein Verfahren zum automatischen Be- und Entladen eines Ablageplatzes des Werkstückwechslers, bei dem eine oder mehrere Achsbewegungen der Handhabungseinrichtung und eine Drehbewegung der Speicheranordnung überlagert ausgeführt werden, um mit den Störkonturen der Handhabungseinrichtung in den freien Zwischenraum zwischen den Werkstücken bzw. den Werkstückpaletten eintauchen zu können. Dies ermöglicht eine kompaktere Bauweise.

Diese Aufgabe wird außerdem gelöst durch ein Verfahren zum automatischen Be- und Entladen eines Ablageplatzes des Werkstückwechslers, bei dem die Übergabeposition in horizontaler Richtung auf einer ellipsenförmigen Bahn angefahren wird, indem eine Drehbewegung der Handhabungseinrichtung interpolierend mit einer linearen Horizontalbewegung der Handhabungseinrichtung ausgeführt wird und/oder gleichzeitig die Drehbewegung der Speicheranordnung ausgeführt wird, um größere Werkstücke bzw. Werkstückpaletten ablegen zu können.

Weitere Einzelheiten, Merkmale und Vorteile der Erfindung ergeben sich aus nachfolgender Beschreibung anhand der Zeichnungen. Es zeigen:
- Figur 1: eine Seitenansicht eines erfindungsgemäß aufgebauten Werkstückwechslers,
- Figur 2: eine Draufsicht auf einen erfindungsgemäß aufgebauten Werkstückwechsler,
- Figur 3: eine Detailansicht des erfindungsgemäß aufgebauten Werkstückwechslers,
- Figur 4: den Werkstückwechselvorgang (Annäherung der Handhabungseinrichtung zur Werkstückpalette), und
- Figur 5: den Werkstückwechselvorgang in der unteren Ablageebene.

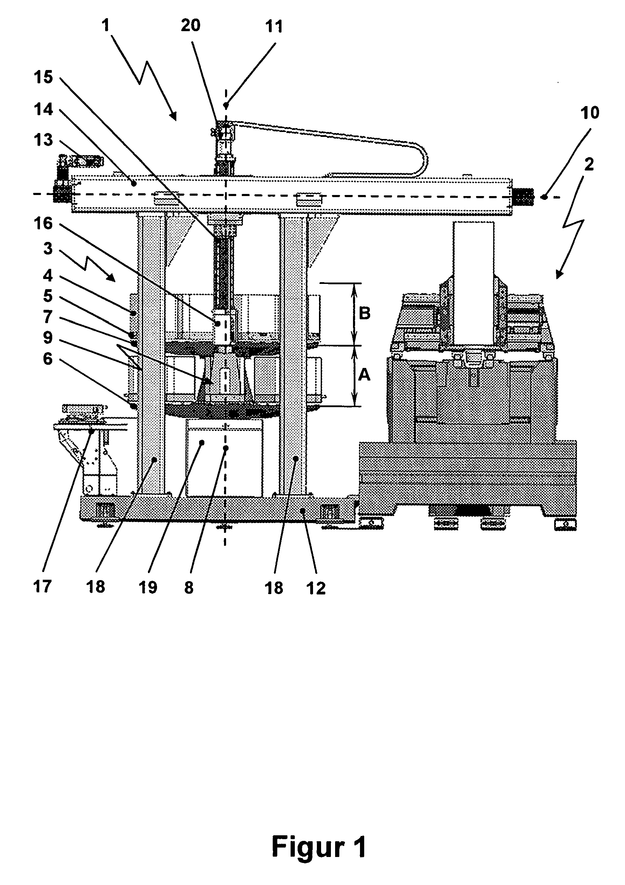

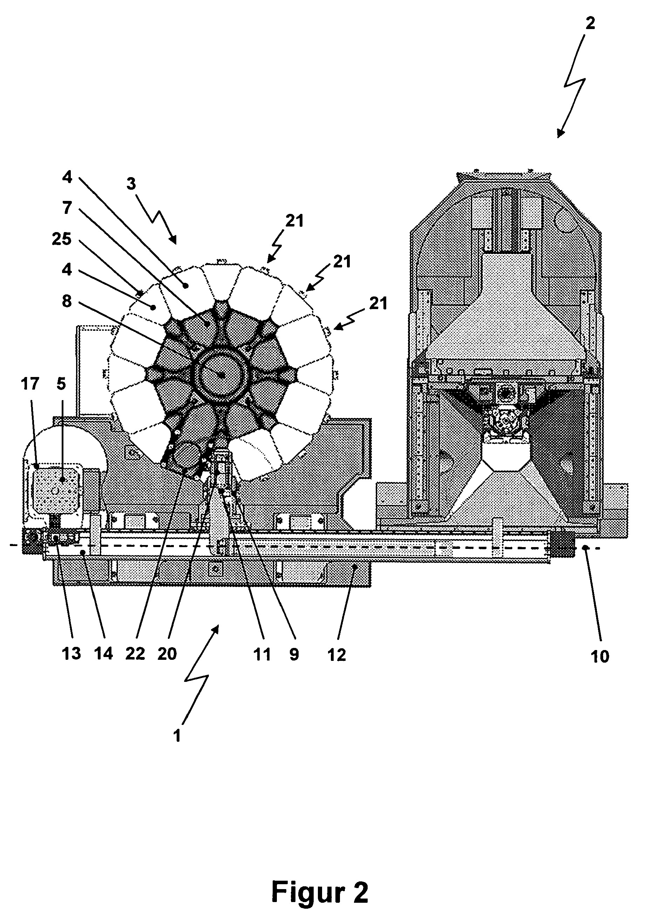

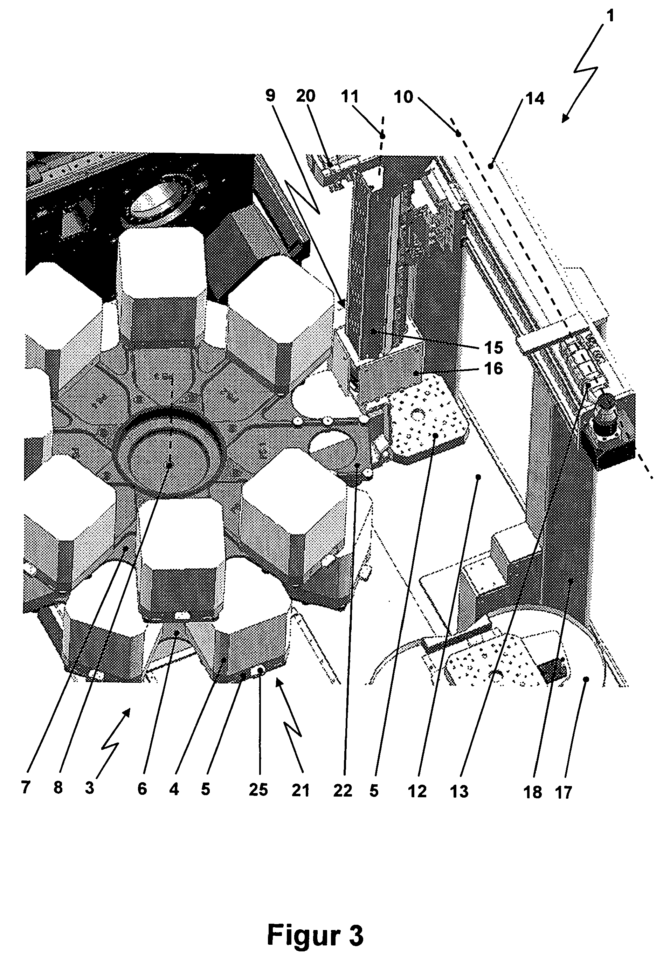

In den Figuren 1 bis 3 ist ein Werkstückwechsler 1 für den automatischen Werkstück- oder Palettenwechsel dargestellt. Der Werkstückwechsler 1 ist im dargestellten Ausführungsbeispiel in Portalbauweise aufgebaut und seitlich an einem Bearbeitungszentrum 2 angeordnet, um ein seitliches Be- und Entladen des Bearbeitungszentrums 2 zu ermöglichen. Das Bearbeitungszentrum 2 kann in Gantry- oder Fahrständerbauweise ausgebildet sein.

Der Werkstückwechsler 1 weist eine Speicheranordnung 3 für Werkstücke 4 oder Werkstückpaletten 5 mit einer Vielzahl von Ablageplätzen 21 auf, die auf mehreren vertikal übereinander angeordneten Ablageebenen 6, 7 angeordnet sind und die Form eines Kreisrings bilden. Die Ablageplätze 21 sind auf allen Ablageebenen 6, 7 gemeinsam kraftbetrieben um eine vertikale Achse 8 drehbar.

Der Werkstückwechsler 1 weist weiterhin eine seitlich neben der Speicheranordnung 3 befindliche Handhabungseinrichtung 9 für die Werkstücke 4 oder die Werkstückpaletten 5 auf. Die Handhabungseinrichtung 9 ist linear entlang einer horizontalen Achse 10 und linear entlang einer vertikalen Achse 11 verfahrbar und kann zusätzlich um diese vertikale Achse 11 gedreht werden. Zur horizontalen Verfahrbarkeit ist die Handhabungseinrichtung 9 mittels eines Antriebsmotors 13 entlang einer Brücke 14 verfahrbar, welche die horizontale Achse 10 bildet. Zur vertikalen Verfahrbarkeit ist die Handhabungseinrichtung 9 an einem Vertikalschlitten 15 gelagert, der mittels eines Antriebsmotors 20 in vertikaler Richtung verfahrbar ist.

Der Werkstückwechsler 1 ist auf einem Grundgestell 12 gelagert, auf dem vertikal verlaufenden Stützen 18 angeordnet sind, welche die Brücke 14 tragen. Auf dem Grundgestell 12 sind weiterhin ein Rüsttisch 17 und ein Tisch 19 angeordnet.

Die Ablageplätze 21 auf einer Ablageebene 6, 7 sind winkelversetzt zu den Ablageplätzen 21 auf der darüber- und/oder darunterliegenden Ablageebene 6, 7 angeordnet, so dass über und/oder unter jedem Werkstück 4 bzw. jeder Werkstückpalette 5 ein freier Zwischenraum entsteht, in den die Störkonturen 16 der Handhabungseinrichtung 9 bei einem Wechselvorgang eintauchen können. Der freie Zwischenraum neben jedem Ablageplatz 21 ist groß genug, um die Werkstücke 4 oder Werkstückpaletten 5 mit der Handhabungseinrichtung 9 innerhalb der jeweiligen Ablageetage A, B in horizontaler Richtung nur durch eine kreisoder ellipsenförmige Bewegung der jeweiligen Übergabeposition 24 zuzuführen oder von dieser zu entfernen.

Bei dem dargestellten Ausführungsbeispiel ist der freie Zwischenraum neben jedem Ablageplatz 21 groß genug, um die Werkstücke 4 oder Werkstückpaletten 5 innerhalb der jeweiligen Ablageetage A, B in horizontaler Richtung nur durch die reine kreisförmige Drehbewegung c der Handhabungseinrichtung 9 der jeweiligen Übergabeposition 24 zuzuführen oder von dieser zu entfernen.

Einer der Ablageplätze 21 dient als Leerplatz 22 und wird nicht mit Werkstücken 4 bzw. Werkstückpaletten 5 belegt. Dies ermöglicht den Transport eines Werkstücks 4 bzw. einer Werkstückpalette 5 in linearer Horizontalrichtung innerhalb der jeweiligen Ablageetage A, B.

Der Leerplatz 22 befindet sich bevorzugt auf der obersten oder der untersten Ablageebene 6, 7.

Pro Ablageebene 6, 7 sind jeweils 8 Ablageplätze 21 mit einer gleichmäßigen Kreisteilung von 45° angeordnet, und der Versatz zwischen den Ablageplätzen 21 auf den vertikal benachbarten Ablageebenen 6, 7 beträgt jeweils 22,5°.

Das automatische Be- und Entladen eines Ablageplatzes 21 mit dem Werkstückwechsler 1 erfolgt derart, dass eine oder mehrere Achsbewegungen b, c der Handhabungseinrichtung 9 und eine Drehbewegung a der Speicheranordnung 3 überlagert ausgeführt werden. Somit können die Störkonturen 16 der Handhabungseinrichtung 9 in den freien Zwischenraum zwischen den Werkstücken 4 bzw. den Werkstückpaletten 5 eintauchen, was eine kompaktere Bauweise ermöglicht.

Zusätzlich kann das automatische Be- und Entladen eines Ablageplatzes 21 mit dem Werkstückwechsler 1 auch derart erfolgen, dass die Übergabeposition 24 in horizontaler Richtung auf einer ellipsenförmigen Bahn angefahren wird, indem die Drehbewegung c der Handhabungseinrichtung 9 interpolierend mit der linearen Horizontalbewegung b der Handhabungseinrichtung 9 ausgeführt wird und/oder gleichzeitig die Drehbewegung a der Speicheranordnung 3 ausgeführt wird, um größere Werkstücke 4 bzw. Werkstückpaletten 5 ablegen zu können.

Vor einem Wechsel wird die aus der Speicheranordnung 3 zu entnehmende Werkstückpalette 5 durch eine Drehung der Speicheranordnung 3 in eine Vorposition 23 gebracht. Dafür ist es erforderlich, dass die Störkonturen 16 der Handhabungseinrichtung 9 über der Oberkante der in der oberen Ablageetage 7 abgelegten Werkstücke 4 positioniert sind. Anschließend bewegt sich die Handhabungseinrichtung 9 in vertikaler Richtung nach unten. Bei der Entnahme einer Werkstückpalette 5 von der unteren Ablageebene 6 tauchen die Störkonturen 16 der Handhabungseinrichtung 9 dabei in den freien Zwischenraum zwischen den Werkstücken 4 aus der oberen Ablageebene 7 ein. Daraufhin wird die Handhabungseinrichtung 9 durch folgende simultane Bewegungen an den Palettenhalter 25 angenähert:
- Drehbewegung a der Speicheranordnung 3
- Horizontalbewegung b der Handhabungseinrichtung 9
- Drehbewegung c der Handhabungseinrichtung 9

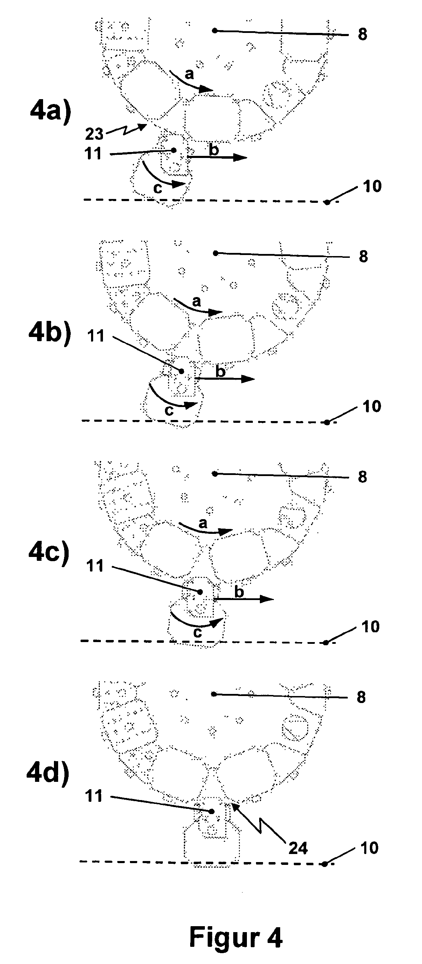

Der Vorgang ist abgeschlossen, wenn die zu entnehmende Werkstückpalette 5 den Übergabeplatz 24 erreicht hat (s. Figuren 4a bis 4d).

Abschließend wird die Werkstückpalette 5 über eine kurze vertikale Linearbewegung nach oben durch eine Greifervorrichtung aufgenommen und aus der Fixierung des Ablageplatzes 21 entnommen.

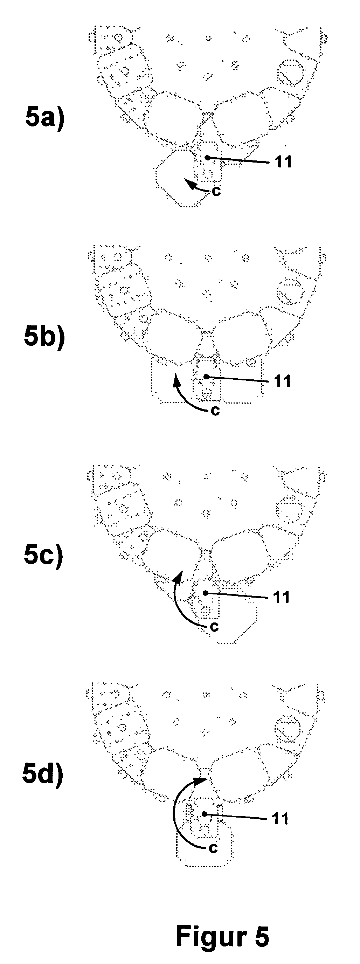

Die Figuren 5a bis 5d zeigen einen Wechselvorgang innerhalb der unteren Ablageebene 6 durch eine reine Drehbewegung c der Handhabungseinrichtung 9. Es ist aber auch denkbar, dass der Wechselvorgang durch Überlagerung der Bewegungen c und b oder c und a oder c, b, und a ausgeführt wird, um eine weniger breite Störbahn abfahren zu können und somit größere Werkstücke ablegen zu können.

### Bezugszeichenliste

- 1: Werkstückwechsler
- 2: Bearbeitungszentrum
- 3: Speicheranordnung
- 4: Werkstück
- 5: Werkstückpalette
- 6: Ablageebene
- 7: Ablageebene
- 8: Vertikale Achse
- 9: Handhabungseinrichtung
- 10: Horizontale Achse
- 11: Vertikale Achse
- 12: Grundgestell
- 13: Antriebsmotor
- 14: Brücke
- 15: Vertikalschlitten
- 16: Störkonturen
- 17: Rüsttisch
- 18: Stütze
- 19: Tisch
- 20: Antriebsmotor
- 21: Ablageplatz
- 22: Leerplatz
- 23: Vorposition
- 24: Übergabeposition
- 25: Palettenhalter
- A: Ablageetage
- B: Ablageetage
- a: Drehbewegung Speicheranordnung
- b: Horizontalbewegung Handhabungseinrichtung
- c: Drehbewegung Handhabungseinrichtung

## Patentansprüche

1. Werkstückwechsler (1) für den automatischen Werkstück- oder Palettenwechsel, wobei der Werkstückwechsler (1) vorzugsweise in Portalbauweise aufgebaut und insbesondere zur seitlichen Be- und Entladung eines Bearbeitungszentrums (2) in Gantry- oder Fahrständerbauweise geeignet ist, umfassend
- eine Speicheranordnung (3) für Werkstücke (4) oder Werkstückpaletten (5) mit einer Vielzahl von Ablageplätzen (21), die auf mehreren vertikal übereinander angeordneten Ablageebenen (6, 7) die Form eines Kreisrings bilden und die auf allen Ablageebenen (6, 7) gemeinsam kraftbetrieben um eine vertikale Achse (8) drehbar sind und
- eine seitlich neben der Speicheranordnung (3) befindliche Handhabungseinrichtung (9) für die Werkstücke (4) oder die Werkstückpaletten (5), die linear entlang einer horizontalen Achse (10) und linear entlang einer vertikalen Achse (11) verfahrbar und um diese vertikale Achse (11) drehbar ist,
**dadurch gekennzeichnet, dass** die Ablageplätze (21) auf einer Ablageebene (6, 7) winkelversetzt zu den Ablageplätzen (21) auf der darüberund/oder darunterliegenden Ablageebene (6, 7) angeordnet sind, so dass über und/oder unter jedem Werkstück (4) bzw. jeder Werkstückpalette (5) ein freier Zwischenraum entsteht, in den die Störkonturen (16) der Handhabungseinrichtung (9) bei einem Wechselvorgang eintauchen können, und dass der freie Zwischenraum neben jedem Ablageplatz (21) groß genug ist, um die Werkstücke (4) oder die Werkstückpaletten (5) mit der Handhabungseinrichtung (9) innerhalb der jeweiligen Ablageetage (A, B) in horizontaler Richtung nur durch eine kreis- oder ellipsenförmige Bewegung der jeweiligen Übergabeposition (24) zuzuführen oder von dieser zu entfernen.

2. Werkstückwechsler nach Anspruch 1 **dadurch gekennzeichnet, dass** der freie Zwischenraum neben jedem Ablageplatz (21) groß genug ist, um die Werkstücke (4) oder die Werkstückpaletten (5) innerhalb der jeweiligen Ablageetage (A, B) in horizontaler Richtung nur durch die reine kreisförmige Drehbewegung (c) der Handhabungseinrichtung (9) der jeweiligen Übergabeposition (24) zuzuführen oder von dieser zu entfernen.

3. Werkstückwechsler nach einem der vorhergehenden Ansprüche **dadurch gekennzeichnet, dass** ein Ablageplatz (21) als Leerplatz (22) dient und nicht mit Werkstücken (4) bzw. Werkstückpaletten (5) belegt wird, um den Transport eines Werkstücks (4) bzw. einer Werkstückpalette (5) in linearer Horizontalrichtung innerhalb der jeweiligen Ablageetage (A, B) zu ermöglichen.

4. Werkstückwechsler nach Anspruch 3 **dadurch gekennzeichnet, dass** sich der Leerplatz (22) auf der obersten oder der untersten Ablageebene (6, 7) befindet.

5. Werkstückwechsler nach einem der vorhergehenden Ansprüchen **dadurch gekennzeichnet, dass** pro Ablageebene (6, 7) jeweils 8 Ablageplätze (21) mit einer gleichmäßigen Kreisteilung von 45° angeordnet sind.

6. Werkstückwechsler nach Anspruch 5 **dadurch gekennzeichnet, dass** der Versatz zwischen den Ablageplätzen (21) auf den vertikal benachbarten Ablageebenen (6, 7) jeweils 22,5° beträgt.

7. Verfahren zum automatischen Be- und Entladen eines Ablageplatzes (21) eines Werkstückwechslers (1) nach einem der vorhergehenden Ansprüchen, bei dem eine oder mehrere Achsbewegungen der Handhabungseinrichtung (9) und eine Drehbewegung (a) der Speicheranordnung (3) überlagert ausgeführt werden, um mit den Störkonturen (16) der Handhabungseinrichtung (9) in den freien Zwischenraum zwischen den Werkstücken (4) bzw. den Werkstückpaletten (5) eintauchen zu können.

8. Verfahren zum automatischen Be- und Entladen eines Ablageplatzes (21) eines Werkstückwechslers (1) nach einem der vorhergehenden Ansprüchen, bei dem die Übergabeposition (24) in horizontaler Richtung auf einer ellipsenförmigen Bahn angefahren wird, indem eine Drehbewegung (c) der Handhabungseinrichtung (9) interpolierend mit einer linearen Horizontalbewegung (b) der Handhabungseinrichtung (9) ausgeführt wird und/oder gleichzeitig die Drehbewegung (a) der Speicheranordnung (3) ausgeführt wird, um größere Werkstücke (4) bzw. Werkstückpaletten (5) ablegen zu können.

## Claims

1. Workpiece changer (1) for the automatic changing of workpieces or pallets, wherein the workpiece changer (1) is preferably formed in the gantry design and is particularly suitable for laterally loading and unloading a processing centre (2) in the gantry or travelling column design, comprising
- a store arrangement (3) for workpieces (4) or workpiece pallets (5) having a multiplicity of storage locations (21) which form the shape of a circular ring on a plurality of storage planes (6, 7) arranged vertically one above the other and which, driven by power, can be jointly rotated about a vertical axis (8) on all the storage planes (6, 7), and
- a handling device (9) for the workpieces (4) or the workpiece pallets (5) which is located laterally next to the store arrangement (3) and is able to travel linearly along a horizontal axis (10) and linearly along a vertical axis (11) and to rotate about this vertical axis (11),
**characterised in that** the storage locations (21) are arranged on a storage plane (6, 7) in an angularly offset manner with respect to the storage locations (21) on the storage plane (6, 7) located thereabove and/or therebelow, so that a free intermediate space is produced above and/or below each workpiece (4) or each workpiece pallet (5), into which the interfering contours (16) of the handling device (9) can be inserted during a changing process, and that the free intermediate space next to each storage location (21) is large enough to supply the workpieces (4) or the workpiece pallets (5) to the respective transfer position (24), or to remove same therefrom, using the handling device (9) within the respective storage tier (A, B) in the horizontal direction only by means of a circular or elliptical movement.

2. Workpiece changer as claimed in claim 1, **characterised in that** the free intermediate space next to each storage location (21) is large enough to supply the workpieces (4) or the workpiece pallets (5) to the respective transfer position (24), or to remove same therefrom, within the respective storage tier (A, B) in the horizontal direction only by means of the pure circular rotational movement (c) of the handling device (9).

3. Workpiece changer as claimed in any one of the preceding claims, **characterised in that** a storage location (21) is used as an empty location (22) and is not occupied by workpieces (4) or workpiece pallets (5) in order to permit the transport of a workpiece (4) or a workpiece pallet (5) in the linear horizontal direction within the respective storage tier (A, B).

4. Workpiece changer as claimed in claim 3, **characterised in that** the empty location (22) is located on the uppermost or lowermost storage plane (6, 7).

5. Workpiece changer as claimed in any one of the preceding claims, **characterised in that** 8 storage locations (21) are arranged on each storage plane (6, 7) at a uniform circle graduation of 45°.

6. Workpiece changer as claimed in claim 5, **characterised in that** the offset between the storage locations (21) on the vertically adjacent storage planes (6, 7) is 22.5° in each case.

7. Method for automatically loading and unloading a storage location (21) of a workpiece changer (1) as claimed in any one of the preceding claims, wherein one or more axial movements of the handling device (9) and a rotational movement (a) of the store arrangement (3) are effected in a superimposed manner in order to be able to insert the interfering contours (16) of the handling device (9) into the free intermediate space between the workpieces (4) or the workpiece pallets (5).

8. Method for automatically loading and unloading a storage location (21) of a workpiece changer (1) as claimed in any one of the preceding claims, wherein the transfer position (24) is approached in the horizontal direction on an elliptical path, in that a rotational movement (c) of the handling device (9) is effected in a manner interpolated with a linear horizontal movement (b) of the handling device (9) and/or the rotational movement (a) of the store arrangement (3) is effected at the same time in order to be able to store larger workpieces (4) or workpiece pallets (5).

## Revendications

1. Changeur de pièce (1) pour le changement automatique de pièces ou de palettes, dans lequel le changeur de pièce (1) présente de préférence une structure de portique et est adapté en particulier pour le chargement et déchargement latéral d'un centre d'usinage (2) à portique ou à colonne mobile, comprenant
- un ensemble de stockage (3) pour des pièces (4) ou des palettes de pièces (5), pourvu d'une pluralité d'emplacements de rangement (21), qui forment, sur plusieurs niveaux de rangement (6, 7) disposés verticalement les uns au-dessus des autres, la forme d'une couronne et qui peuvent tourner autour d'un axe (8) vertical conjointement de manière motorisée sur tous les niveaux de rangement (6, 7), et
- un dispositif de manipulation (9) se trouvant latéralement à côté de l'ensemble de stockage (3), pour les pièces (4) ou pour les palettes de pièces (5), qui peut être déplacé de manière linéaire le long d'un axe horizontal (10) et de manière linéaire le long d'un axe vertical (11) et qui peut tourner autour dudit axe vertical (11),
**caractérisé en ce que** les emplacements de rangement (21) sont disposés sur un niveau de rangement (6, 7) avec un décalage angulaire par rapport aux emplacements de rangement (21) sur le niveau de rangement (6, 7) situé au-dessus et/ou en dessous de manière à créer un espace intermédiaire libre au-dessus de et/ou sous chaque pièce (4) ou chaque palette de pièces (5), dans lequel les contours gênants (16) du dispositif de manipulation (9) peuvent plonger lors d'une opération de changement, et **en ce que** l'espace intermédiaire libre à côté de chaque emplacement de rangement (21) est suffisamment grand pour amener les pièces (4) ou les palettes de pièces (5), à l'aide du dispositif de manipulation (9), à l'intérieur de l'étage de rangement (A, B) respectif, dans une direction horizontale seulement par un déplacement de forme circulaire ou elliptique à la position de transfert (24) respective ou de les en retirer.

2. Changeur de pièce selon la revendication 1, **caractérisé en ce que** l'espace intermédiaire libre à côté de chaque emplacement de rangement (21) est suffisamment grand afin d'amener les pièces (4) ou les palettes de pièces (5), à l'intérieur de l'étage de rangement (A, B) respectif, dans une direction horizontale, uniquement par le simple déplacement de rotation (c) de forme circulaire du dispositif de manipulation (9), à la position de transfert (24) respective ou de les en retirer.

3. Changeur de pièce selon l'une quelconque des revendications précédentes, **caractérisé en ce qu'**un emplacement de rangement (21) fait office d'emplacement vide (22) et n'est pas occupé par des pièces (4) ou des palettes de pièces (5) afin de permettre le transport d'une pièce (4) ou d'une palette de pièces (5) dans une direction horizontale linéaire, à l'intérieur de l'étage de rangement (A, B) respectif.

4. Changeur de pièce selon la revendication 3, **caractérisé en ce que** l'emplacement vide (22) se trouve sur le niveau de rangement (6, 7) le plus haut ou le plus bas.

5. Changeur de pièce selon l'une quelconque des revendications précédentes, **caractérisé en ce que** par niveau de rangement (6, 7), respectivement 8 emplacements de rangements (21) sont disposés avec une répartition circulaire constante de 45°.

6. Changeur de pièce selon la revendication 5, **caractérisé en ce que** le décalage entre les emplacements de rangement (21) sur les niveaux de rangement (6, 7) adjacents de manière verticale présente une valeur respectivement de 22,5°.

7. Procédé pour charger et à décharger de manière automatique un emplacement de rangement (21) d'un changeur de pièce (1) selon l'une quelconque des revendications précédentes, dans le cadre duquel un ou plusieurs déplacements axiaux du dispositif de manipulation (9) et un déplacement de rotation (a) de l'ensemble de stockage (3) sont exécutés de manière superposée afin de pouvoir plonger, par les contours gênants (16) du dispositif de manipulation (9), dans l'espace intermédiaire libre entre les pièces (4) ou les palettes de pièces (5).

8. Procédé pour charger et à décharger de manière automatique un emplacement de rangement (21) d'un changeur de pièce (1) selon l'une quelconque des revendications précédentes, dans le cadre duquel la position de transfert (24) est amenée dans une direction horizontale, sur une voie de forme elliptique en ce qu'un déplacement de rotation (c) du dispositif de manipulation (9) est exécuté par interpolation avec un déplacement horizontal linéaire (b) du dispositif de manipulation (9) et/ou en ce que dans le même temps le déplacement de rotation (a) de l'ensemble de stockage (3) est exécuté afin de pouvoir déposer des pièces (4) ou des palettes de pièces (5) de plus grande taille.
